# EUROPÄISCHE PATENTANMELDUNG

(11) **EP 4 843 738 A1**
(43) Veröffentlichungstag der Anmeldung: **25.11.2026**
(21) Anmeldenummer: 26178483.9
(22) Anmeldetag: 13.05.2026
(51) Int. Cl.: B29B 17/02

(54) **VERFAHREN UND ANLAGE ZUM SOLVOLYTISCHEN RECYCLING VON CARBONFASERVERSTÄRKTEN POLYMEREN**

(30) Priorität: 19.05.2025 DE 102025119302
(71) Anmelder: Technische Universität Dresden, Körperschaft des öffentlichen Rechts, 01069 Dresden (DE)
(72) Erfinder: Deuter, Carolin, 01069 Dresden (DE); Höfs, Konstantin, 01069 Dresden (DE); Schubert, Markus, 01069 Dresden (DE); Hiller, Andreas, 01069 Dresden (DE)
(74) Vertreter: Kailuweit & Uhlemann Patentanwälte Partnerschaft mbB

(57) **Zusammenfassung**

Die Erfindung betrifft ein Verfahren und eine Vorrichtung zum solvolytischen Recycling von faserverstärktem Kunststoff.

Das Verfahren weist dabei die folgenden Schritte auf:
a. Befüllen des Reaktors mit faserverstärktem Kunststoff,
b. Schließen des Reaktors,
c. Inertisierung des Reaktors,
d. Aufwärmen des Reaktors und Zuführung des Lösemittels,
e. Haltephase; Trennung der Faser von der Matrix,
f. Partielle Entspannung des Reaktors,
g. Einem Spülvorgang, sowie
h. Einer Abkühl- und Entspannungsphase
i. Inertisierung des Reaktors
j. Entleeren des Reaktors.

Besonders hervorzuheben ist, dass als Lösungsmittel Wasserdampf im subkritischen Bereich verwendet wird.

Die Vorrichtung umfasst dabei mindestens die folgenden Komponenten:
a. Mindestens einen Dampferzeuger,
b. Mindestens einen Energiespeicher,
c. Mindestens eine Wärmepumpe,
d. Mindestens einen Kondensattrenner und
e. Mindestens einen bis beliebig viele Solvolyse-Reaktoren.

## Beschreibung

Die Erfindung betrifft eine Vorrichtung und ein Verfahren zum solvolytischen Recycling von Kohlenstofffaser verstärkten Kunststoffen.

Faserverstärkte Kunststoffe bieten aufgrund ihrer geringen Dichte und guten mechanischen Eigenschaften ein enorm hohes Leichtbau-Potential. Es ist damit zu rechnen, dass aufgrund immer ansteigender Anforderungen an leichteren und energieeffizienteren Fahr- und Flugzeugen, sowie andere maschinenbauliche Einrichtungen, solche Verbundwerkstoffe zukünftig öfter eingesetzt werden.

Nachteilig ist zu erwähnen, dass diese Werkstoffgruppe sich aktuell nur schwierig industriell recyclen lassen. Es haben sich bislang noch keine ökonomisch und ökologisch sinnvolle Recyclingprozesse auf dem Markt etabliert.

Kohlenstofffasern sind sehr aufwändig in ihrer Herstellung und fallen daher ökonomisch wie ökologisch negativ ins Gewicht. Daher existiert auch besonders für diese Verstärkungsfaser ein großer Bedarf an alternative Verfahren, welche eine ökonomisch wie ökologisch günstiger hergestellte Faser ermöglichen. Hier können zuverlässige Recyclingverfahren von Kohlefaserverstärkten Kunststoffen eine Lösung sein.

Vornehmlich werden Kohlefasern in duroplastische Harzsysteme eingesetzt, welche mittels chemischer Recyclingverfahren wiedergewonnen werden können. Allerdings existieren wie eingangs kurz erwähnt kaum ökologisch wie ökonomisch sinnvolle technische Lösungen.

KR101017101366A beschreibt ein solvolytisches Verfahren in dem Kohlenstofffasern von dem Matrixsystem getrennt werden können. Hier wird der Verbundwerkstoff zunächst bei 220°C bis 230°C für 5h bis 7h aufgelöst. Als Lösungsmittel wird Diethylenglykol verwendet und als Katalysator Natriumhydroxid.

US2023399484A1 offenbart eine Reaktor-Anordnung zur Solvolyse von Kunststoffen. Als Lösungsmittel wird hier Wasser im überkritischen Bereich verwendet. Die Vorrichtung besteht aus drei hintereinander geschalteten Reaktor-Kammern. In der ersten Reaktorkammer werden die Faserkunststoffverbunde vorgeheizt und dann in der zweiten Reaktor-Kammer dem eigentlichen Solvolyse-Prozess ausgesetzt zu werden. Abschließend kühlen die Fasern in der dritten Reaktor-Kammer.

DE102016105966B4 beschreibt ein Verfahren sowie eine Vorrichtung zum Recycling von Kohlefaserverstärkten Polymeren, bei dem Wasser im überkritischen Zustand als Lösungsmittel eingesetzt wird, um die Kohlenstofffasern von der umgebenden Polymermatrix zu trennen. Die Vorrichtung umfasst zwei gleichartige Reaktoren, deren Betrieb wechselweise aufeinander abgestimmt ist. Zunächst wird der erste Reaktor mit dem Recyclinggut beladen und mit flüssigen Lösungsmittel befüllt. Anschließend wird der erste Reaktor auf eine Prozesstemperatur zwischen 374,12°C und 450°C aufgeheizt. Der Prozessdruck wird zwischen 221,2 bar und 300 bar eingestellt. Während im ersten Reaktor nun die Polymermatrix sich chemisch aufzulösen beginnt und die Fasern separiert werden, wird der zweite Reaktor mit Recyclinggut beladen und mit Lösungsmittel befüllt. Der Energiebedarf bleibt aufgrund der überkritischen Bedingungen (>374°C und >221 bar) hoch. Des Weiteren ist die Taktung der Reaktionsschritte nicht detailliert definiert, was die Synchronisation des Parallelbetriebs von mehreren Reaktoren erschwert.

Aufgabe ist es daher, ein Verfahren, sowie eine Vorrichtung bereitzustellen, welches die Nachteile des Standes der Technik zumindest teilweise überwindet. Aufgabe der Erfindung ist insbesondere ein energieeffizientes Recycling von faserverstärkten duroplastischen Polymeren, bei gleichzeitiger ökonomischer Rentabilität.

Erfindungsgemäß wird die Aufgabe durch ein Verfahren und eine Vorrichtung gelöst gemäß den unabhängigen Ansprüchen 1 und 8 gelöst. Vorteilhafte Ausgestaltungen der Erfindung sind in den abhängigen Ansprüchen angegeben.

Ein erster Aspekt der Erfindung betrifft ein Verfahren zum Recycling von Faserverstärkten Polymeren mittels einer Solvolyse, aufweisend mindestens die folgenden Schritte in dieser Reihenfolge:
- Befüllen eines Reaktors mit dem zu recycelten faserverstärkten Kunststoff,
- Schließen des Reaktors,
- Anschließende Inertisierung des Reaktors,
- Aufheizen des Reaktors auf die notwendige Prozesstemperatur, sowie Zuführung des Lösungsmittels,
- Einer Haltephase, während derer die Fasern von der Polymermatrix getrennt werden,
- Einem Spülvorgang bei dem die übrigen Matrixabbauprodukte (MAP) von den Verstärkungsfasern getrennt werden, und schließlich
- Einer Abkühl- und Entspannungsphase,
- Anschließende Inertisierung des Reaktors und
- Entnahme der Fasern

Im Sinne der Erfindung wird als Lösungsmittel Wasserdampf verwendet, um die Verstärkungsfasern von der Polymermatrix zu trennen. Die Faserverstärkten Polymere werden dafür in einen Korb gelegt und entsprechend platziert. Anschließend wird der Behälter mit den Verstärkungsfasern in den Reaktor gegeben, der Reaktor geschlossen und abschließend mit einem Inertgas inertisiert.

Die Neuheit des Verfahrens liegt in den subkritischen Prozessbedingungen im Dampfbereich. Der Hochdruck-Wasserdampf wird dabei über einen in der Vorrichtung integrierten Dampferzeuger bereitgestellt. Die Dampferzeugung erfolgt dabei vorzugsweise durch eine Kombination aus einem Wärmeübertrager und einem nachgeschalteten Verdichter.

Für das Verfahren wird der Hochdruck-Wasserdampf kontinuierlich oder gestuft entlang der Siedelinie im Trockendampfgebiet erhitzt.

Die verwendete finale Prozesstemperatur wird dabei auf das Matrix-System abgestimmt, welches die Verstärkungsfasern umgibt.

Um die Matrix vollständig zersetzen zu können, und damit die Verstärkungsfaser freizulegen werden die faserverstärkten Kunststoffe in der Haltephase einer bestimmten Temperatur über eine definierte Dauer hinausgesetzt. Die Dauer der Haltephase wird vornehmlich durch die Verweilzeit des Verfahrens angegeben. Diese ist in Ausführungsformen von den Harz-Systemen abhängig, welche die zu recycelten Fasern umgeben.

Nach der Haltezeit wird der Reaktor zweistufig entspannt. Um ein Anhaften der Polymermatrix an den Verstärkungsfasern zu verhindern, wird der Reaktor nach der Haltezeit, partiell entspannt und anschließend mit frischem Hochdruck-Wasserdampf bei einer Temperatur von ca. 250 °C durchgespült. Hierbei werden die im Reaktor befindlichen gasförmigen und flüssigen Komponente mit dem Wasserdampf ausgetragen.

In der anschließenden Abkühl- und Entspannungsphase wird der Reaktor auf eine Zieltemperatur abgekühlt und der unter Druck stehende Wasserdampf entspannt und ausgetragen. Abschließend werden die Fasern bei einer Temperatur > 100°C aus dem Reaktor entnommen. Vor dem Öffnen des Reaktors wird dieser erneut inertisiert.

Vorteilhaft ist, dass die Erfindung als Lösungsmittel Wasserdampf einsetzt. Nach dem Stand der Technik wird üblicherweise Wasser im überkritischen Bereich bei dem solvolytischen Recycling von faserverstärkten Kunstoffen eingesetzt. Durch den Einsatz von Wasserdampf, lässt sich der Energieverbrauch des Verfahrens deutlich gegenüber dem Stand der Technik reduzieren. Vornehmlich deswegen, dass die finalen Prozesstemperaturen für das Verfahren mit Wasserdampf bei deutlich geringeren Temperaturen betrieben werden kann, verglichen mit superkritischem Wasser als Lösungsmittel. Ferner läuft das Verfahren durch den Einsatz von Wasserdampf als Lösungsmittel mit niedrigerem Drücken ab, verglichen mit den herkömmlichen Verfahren aus dem Stand der Technik.

Ein weiterer Aspekt der Erfindung betrifft eine Vorrichtung zum Recycling von faserverstärkten Polymeren mittels einer Solvolyse, aufweisend mindestens die folgenden Komponenten:
- einen Dampferzeuger,
- einen Energiespeicher,
- eine Wärmepumpe,
- einem Kondensattrenner und
- mindestens einen Solvolyse-Reaktor.

Vorteilhaft ist die Vorrichtung derartig ausgebildet, dass die Solvolyse mit einem Reaktor als Batch-Prozess ablaufen kann, als auch mit beliebig vielen Reaktoren in einem semi-kontinuierlichen Prozess ablaufen kann. Des Weiteren ist ein Parallelbetrieb von mindestens zwei Reaktoren möglich.

Semi-kontinuierlich heißt im Kontext dieser Erfindung das die Solvolyse Reaktion in beliebig vielen Reaktoren von Reaktor zu Reaktor zeitlich versetzt voneinander abläuft.

Im Sinne der Erfindung lassen sich die Reaktoren modular je nach Bedarf der gesamten Anlage hinzufügen oder abschalten. So ist die Vorrichtung beliebig auf die Auftragsmengen einstellbar. Dies ermöglicht nicht nur ein ökonomischeres Recycling, sondern bietet darüber hinaus die Möglichkeit die gesamte Anlage flexibel je nach Auftragslage zu skalieren.

Vorteilhafterweise wird die Energie, welche im Laufe des Prozesses frei wird, in einem Energiespeicher zwischengespeichert. Alle Leitungen der Vorrichtung sind elektrisch beheizt und thermisch isoliert.

Zur Nutzung der Abwärme aus dem Prozess wird in Ausführungsformen auch eine Wärmepumpe eingesetzt.

Die, während dem Prozess entstehenden und nicht kondensierbaren, Gase werden über ein Abluftsystem ausgeführt und mit Hilfe eine Abluftfilter entfernt.

In Ausführungsformen erfolgt die Bestückung der Reaktoren per Hand und/oder mittels eines automatisierten Roboters.

In Ausführungsformen sind die verwendeten Reaktoren für eine maximale Prozesstemperatur von 600 °C und einem maximalen Druck von 220,6 bar ausgelegt.

In Ausführungsformen ist die finale Prozesstemperatur des Verfahrens zwischen 250°C und 400°C, insbesondere 290 °C und 372 °C. **In** besonderen Ausführungsformen liegt die finale Prozesstemperatur zwischen 320 °C und 360 °C. Der Prozessdruck liegt zwischen mind. 10 bar und max. 220 bar.

In Ausführungsformen erfolgt die Aufheizung der Reaktoren mittels eines Wärmeträgers im Reaktormantel.

Je nach Prozessführung, in Abhängigkeit von Haltedauer, Druck und Temperatur, kann die Schlichte der Verstärkungsfaser dabei komplett, teilweise oder auch gar nicht entfernt werden.

In Ausführungsformen wird die Energie des Verfahrens in einem Energiespeicher gespeichert, um diese den Prozess für die Aufheizung der Reaktoren wieder zuzuführen. Weiter stellt der Energiespeicher die Energie zur Beheizung der Rohre bereit. Ferner wird in besonderen Ausführungsformen die aus dem Prozess gespeicherte Energie für die Dampferzeugung wiederverwendet.

In besonderen Ausführungsformen ist der verwendete Energiespeicher ein thermischer Energiespeicher.

Ferner wird in Ausführungsformen auch eine Wärmepumpe eingesetzt, um die entstehende Abwärme aus dem getrennten Kondensat dem Prozess wieder zuführen zu können.

In Ausführungsformen wird die Energie über erneuerbare Energiequellen bereitgestellt.

In Ausführungsformen ist das für die Inertisierung verwendete Inertgas mit Stickstoff.

Je nach Ausführungsform lässt sich verglichen mit herkömmlichen Solvolyse-Verfahren, welche Wasser im überkritischen Bereich als Lösungsmittel verwenden, ein deutliches Maß an Energie einsparen.

Vorteilhaft wird gegenüber herkömmlichen Solvolyse-Verfahren bei gleichen Aufheiz- und Abkühlbedingungen durch die Erfindung 20% bis 55% Energie eingespart. Entscheidend dafür sind die Verfahrenstemperaturen und das verwendete Lösungsmittel. Wenn als Lösungsmittel superkritisches Wasser verwendet wird müssen höhere Drücke und Temperaturen während dem Prozess gefahren werden, verglichen mit subkritischem Wasserdampf als Lösungsmittel.

Bei herkömmlichen Prozessen mit Batch-Reaktoren und überkritischem Wasser als Lösungsmittel müssen die Reaktoren nach der Solvolyse-Reaktion auf Umgebungstemperatur abkühlen, bis eine erneute Reaktion stattfinden kann. Vorteilhaft muss das erfindungsgemäße Verfahren nur eine partielle Abkühlung auf eine Temperatur zwischen 100 °C und 200 °C durchlaufen. Hier liegt das Energieeinsparpotential in Ausführungsformen der vorliegenden Erfindung gegenüber dem herkömmlichen Stand der Technik bei 46 % bis 68 %.

In Ausführungsformen kann die Vorrichtung aus einem oder aus mehreren Reaktoren aufgebaut sein. In besonderen Ausführungsformen nutzen alle Reaktoren die gleichen technischen Komponenten wie Energiespeicher, Dampferzeuger und Kondensattrenner.

In Ausführungsformen ist die Dampferzeugung eine energetisch optimierte Verschaltung aus Wärmeübertragern und Verdichtern.

In Ausführungsformen ist der Kondensattrenner ein Phasentrenner , welcher den Wasserdampf von den Matrix Abbauprodukten trennt. Das zu trennende Kondensat besteht dabei aus einer wässrigen und einer öligen Phase. Der Phasentrenner trennt dieses Kondensat auf der Basis der unterschiedlichen Dichten. Die ölige Phase wird in einem weiteren Wärmetauscher abgekühlt und anschließend weiterverarbeitet.

In einer Ausführungsform ist die zu zersetzende Matrix ein einkomponentiges Harz-System mit dem Namen RTM 6. Die zu recycelnde Faser ist eine Kohlenstofffaser. Hier beträgt die maximale Prozesstemperatur 345 °C und die Verweilzeit, um die Matrix vollständig von den Verstärkungsfasern zu lösen, 30 min.

Bei demselben Harz-System und derselben Verstärkungsfaser beträgt in einer weiteren Ausführungsform die maximale Prozesstemperatur 320 °C. Daraus resultiert eine Verweilzeit von 120 min.

In einer Ausführungsform ist die zu zersetzende Matrix ein zweikomponentiges Harz-System, bestehend aus einem Epoxidgemisch (RIMR) und einem Härtergemisch (RIMH). Die von dem Matrix-System umgebene Faser ist eine Kohlenstofffaser. Dieses Harz-System wird bei einer Temperatur von 295 °C in 30 min vollständig zersetzt.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

### Ausführungsbeispiele

Nachfolgend soll die Erfindung anhand eines Ausführungsbeispiels eingehender erläutert werden. Das Ausführungsbeispiel bezieht sich auf ein Verfahren und eine Vorrichtung zum solvolytischen Recycling von faserverstärkten Kunststoffen und soll dabei die Erfindung beschreiben, ohne diese zu beschränken.

Anhand von Zeichnungen wird die Erfindung näher erläutert. Dabei zeigen
- **Fig. 1**: ein Blockfließbild des Verfahrens für die Vorrichtung mit nur einem Reaktor,
- **Fig. 2**: ein Blockfließbild des Verfahrens für die Vorrichtung mit mindestens zwei Reaktoren,
- **Fig. 3**: ein Blockdiagramm für die flexible Skalierbarkeit der Erfindung,
- **Fig. 4**: ein p-T-Diagramm von Wasser, Verfahren läuft im trockenen Dampf Bereich ab.

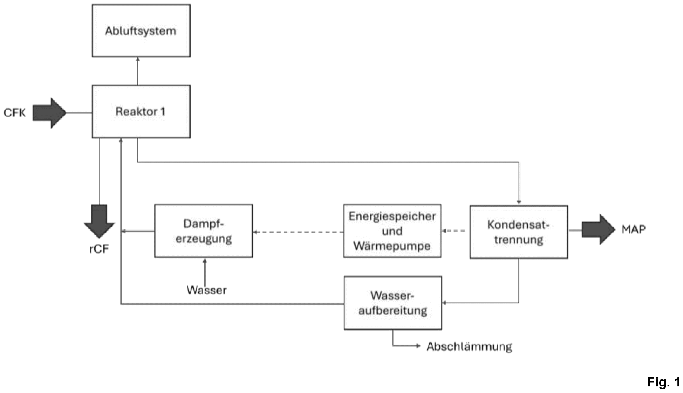

**Figur** 1 zeigt ein schematisches Blockfließbild des Verfahrens in der Batch-Ausführung mit nur einem Reaktor. Die durchgezogenen Linien stellen Stoffströme dar, die gestrichelten Linien stellen Energieströme dar. Wie oben bereits beschrieben wird der "Reaktor 1" mit einem faserverstärkten Kunststoff befüllt. In diesem Ausführungsbeispiel ist es ein kohlefaserverstärkter Kunststoff und ist deshalb mit "CFK" abgekürzt. Weiter wird in diesem Ausführungsbeispiel gezeigt, dass der "Energiespeicher", die Energie für die Dampferzeugung bereitstellt. In Ausführungsformen wird zusätzlich eine Wärmepumpe installiert, welche es ermöglicht, die restliche Abwärme aus den getrennten Kondensaten erneut für den Prozess zu nutzen. Zusätzlich muss für die "Dampferzeugung" auch das Wasser der Vorrichtung zugeführt werden. Aus der "Kondensataufbereitung" resultiert zum einen das Wasser, welches in der "Wasseraufbereitung" wieder aufbereitet wird und die aus der öligen Phase resultierenden Matrixabbauprodukte hier mit "MAP" abgekürzt. Nachdem die Fasern erfolgreich von der Polymer-Matrix getrennt werden konnten, wird das Recyclinggut aus dem Reaktor entnommen. Dass es sich hier um recycelte Kohlenstofffasern handelt, wird dieses Produkt mit "rCF-" abgekürzt.

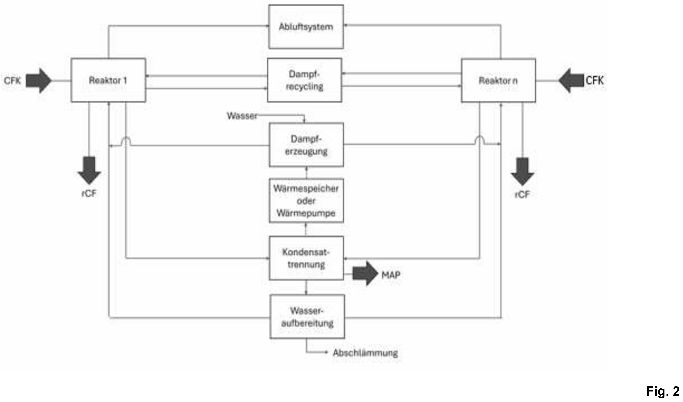

**Figur 2** zeigt ein schematisches Blockfließbild der Vorrichtung und des Verfahrens in einer Ausführung von mindestens zwei Reaktoren. Wie in Fig. stellen die durchgezogenen Linien Stoffströme dar und die gestrichelten Linien Energieströme. In diesem Ausführungsbeispiel wird der parallele Betrieb von zwei Reaktoren anhand eines Blockfließbildes veranschaulicht. Der Ablauf des Verfahrens gleicht grundlegend dem des in Figur 1 bereits beschriebenen Verfahrensablauf.

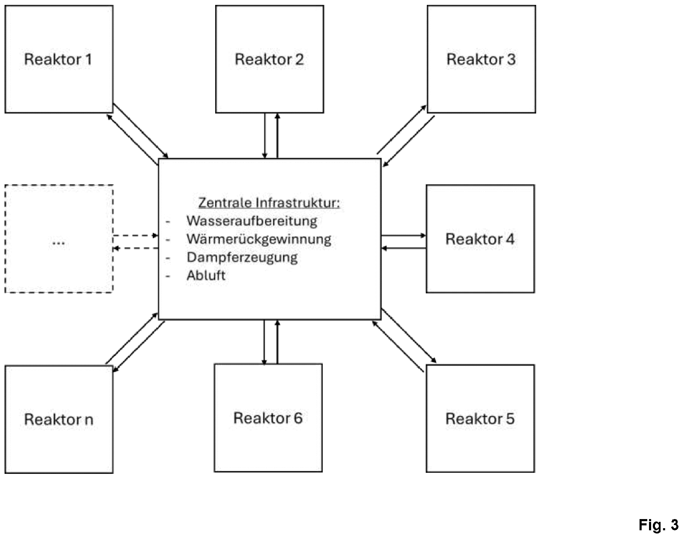

**Figur 3** zeigt die flexible Skalierbarkeit der Erfindung. Anhand eines Blockdiagramms. Hier soll zum einen die beliebige Skalierbarkeit der Reaktoren-Anzahl veranschaulicht werden und zum anderen, dass in einem semi-kontinuierlichen Betrieb, alle Reaktoren dieselbe zentrale Infrastruktur nutzen. Semi-kontinuierlich heißt im Sinne der Erfindung, wie oben bereits beschrieben, dass die Solvolyse-Reaktion in den Reaktoren zeitlich versetzt, voneinander abläuft.

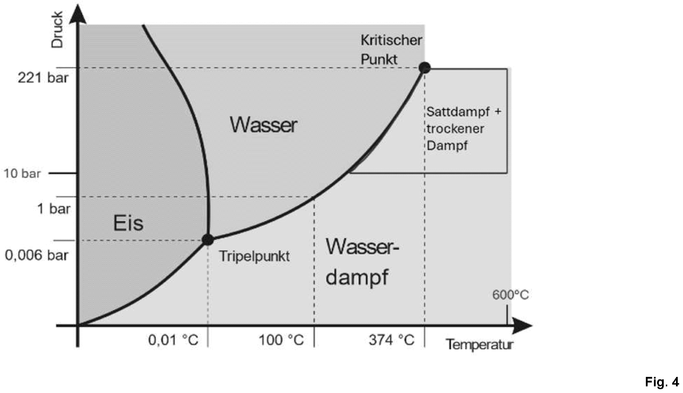

**Figur 4** zeigt ein p-T-Diagramm. Hier ist der für den Prozess relevante Bereich hervorgehoben. Wie oben bereits ausgeführt, wird als Lösungsmittel Wasserdampf unterhalb der Siedelinie verwendet. Das Verfahren läuft in den subkritischen Dampfbereich ab. Vornehmlich liegt das verwendete Lösungsmittel im Sattdampf und trockenen Dampfbereich ab. Theoretisch kann die Vorrichtung im diesem genannten Bereich, um die Polymer-Matrix aufzulösen, um so die Verstärkungsfasern freizulegen.

## Patentansprüche

1. Verfahren zum solvolytischen Recycling von Faserverstärkten Kunststoff, aufweisend die Schritte:
a. Befüllen des Reaktors mit faserverstärktem Kunststoff,
b. Schließen des Reaktors,
c. Inertisierung des Reaktors,
d. Aufwärmen des Reaktors und Zuführung des Lösemittels,
e. Haltephase; Trennung der Faser von der Matrix,
f. Partielle Entspannung des Reaktors,
g. Einem Spülvorgang, sowie
h. Einer Abkühl- und Entspannungsphase
i. Inertisierung des Reaktors
j. Entleeren des Reaktors
**dadurch gekennzeichnet, dass** als Lösungsmittel Sattdampf oder trockener Dampf verwendet wird und die dem Prozess zugeführte Energie über einen Energiespeicher dem Prozess erneut zugeführt wird.

2. Verfahren nach Anspruch 1, wobei das Befüllen des Reaktors per Hand oder vollautomatisch erfolgen kann.

3. Verfahren nach Anspruch 1 oder 2, wobei die Inertisierung des Reaktors mit Stickstoff durchgeführt wird.

4. Verfahren nach einem der Ansprüche 1 bis 3, wobei der die Trennung von Faser und Matrix unterhalb der Siedekurve von Wasser und im reinen Dampfbereich abläuft

5. Verfahren nach einem der Ansprüche 1 bis 4, wobei der Spülvorgang die restlichen Matrixabbauprodukte von den Fasern entfernt und bei der gleichen oder niedrigeren Temperatur stattfindet, wie die Solvolyse Reaktion.

6. Verfahren nach einem der Ansprüche 1 bis 5, wobei der Spülvorgang mit Wasserdampf stattfindet.

7. Verfahren nach einem der Ansprüche 1 bis 6, wobei die wiedergewonnenen Fasern bei einer Temperatur >100°C aus dem Reaktor entnommen werden.

8. Vorrichtung zum solvolytischen Recycling von Faserverstärkten Kunststoff, umfassend folgende Module:
a. Mindestens einen Dampferzeuger,
b. Mindestens einen Energiespeicher,
c. Mindestens eine Wärmepumpe,
d. Mindestens einen Kondensattrenner und
e. Mindestens einen bis beliebig viele Solvolyse-Reaktoren,
wobei entweder mehrere Solvolyse-Reaktoren parallel zueinander geschaltet sind oder die Vorrichtung nur einen Solvolyse-Reaktor aufweist.

9. Vorrichtung nach Anspruch 8, **dadurch gekennzeichnet, dass** der Dampferzeuger eine Kombination von Wärmeübertrager und Verdichter ist.

10. Vorrichtung nach Anspruch 8 oder 9, **dadurch gekennzeichnet, dass** der Energiespeicher ein thermischer Energiespeicher ist.

11. Vorrichtung nach einem der Ansprüche 8 bis 10, **dadurch gekennzeichnet, dass** der Kondensattrenner ein Phasentrenner ist.

12. Vorrichtung nach einem der Ansprüche 8 bis 11, **dadurch gekennzeichnet, dass** der Betrieb der Reaktoren als Batch-Prozess mit einem Reaktor oder als semi-kontinuierlicher Prozess mit mehreren Reaktoren erfolgen kann.

13. Verwendung einer Vorrichtung oder eines Verfahrens nach einem der vorhergehenden Ansprüche für ein solvolytisches Recycling von faserverstärkten Kunststoff, insbesondere in einer flexibel skalierbaren Anlage.
